## Europäisches Patentamt

## European Patent Office

## Office européen des brevets

(11) Publication number: **0 160 069**
**B1**

# EUROPEAN PATENT SPECIFICATION

(45) Date of publication of the patent specification:
06.04.87

(51) Int. Cl.⁴: **B 01 D 33/26**

(21) Application number: **84904012.6**

(22) Date of filling: **19.10.84**

(86) International application number:
**PCT/SE 84/00347**

(87) International publication number:
**WO 85/01672 (25.04.85 Gazette 85/10)**

(54) **ROTATABLE DISC FILTER.**

| | |
|---|---|
| (30) Priority: **21.10.83 SE 8305817** | (73) Proprietor: **NILSSON, Bjarne, Nygatan 18C, S-462 00 Vänersborg (SE)** |
| (43) Date of publication of application:<br>**06.11.85 Bulletin 85/45** | (72) Inventor: **NILSSON, Bjarne, Nygatan 18C, S-462 00 Vänersborg (SE)** |
| (45) Publication of the grant of the patent:<br>**08.04.87 Bulletin 87/15** | (74) Representative: **Modin, Jan, c/o Axel Ehrners Patentbyra AB Box 5342, S-102 46 Stockholm (SE)** |
| (84) Designated Contracting States:<br>**AT BE CH DE FR GB LI LU NL SE** | |
| (56) References cited:<br>**CH-A-162 137**<br>**SE-B-387 544** | |

LIBER, STOCKHOLM 1987

## Description

The present invention relates to a disc filter including a plurality of rotatable, axially spaced, annular filter discs, which are adapted to be partly submerged into a liquid or a suspension to be filtered, each disc consisting of a plurality of hollow filter elements, the interior of which communicating with axial suction channels arranged at or near the circumference of the annular discs for withdrawal of filtrate, a collecting funnel being introduced through all the annular discs to receive particles or parts of a filter cake falling therefrom.

In Swiss Patent Specification 162 137 are described such disc filters, wherein suction is effected at the periphery. One advantage thereof is that falling lumps of filter cake freely can fall down into the collecting funnel without risking - as in disc filters having central suction - to be hanging on the suction channels. However, disc filters employing suction at the periphery are subject to re-flow problems which manifest themselves in that, when the filter elements rise above the liquid level and the vacuum in the suction conduit is released, filtrate flows back from the suction channel into the filter element and re-wets the filter cake deposited thereon.

The object of the invention is to solve this problem, and this has been achieved in that the invention has been given the features stated in the appended claims.

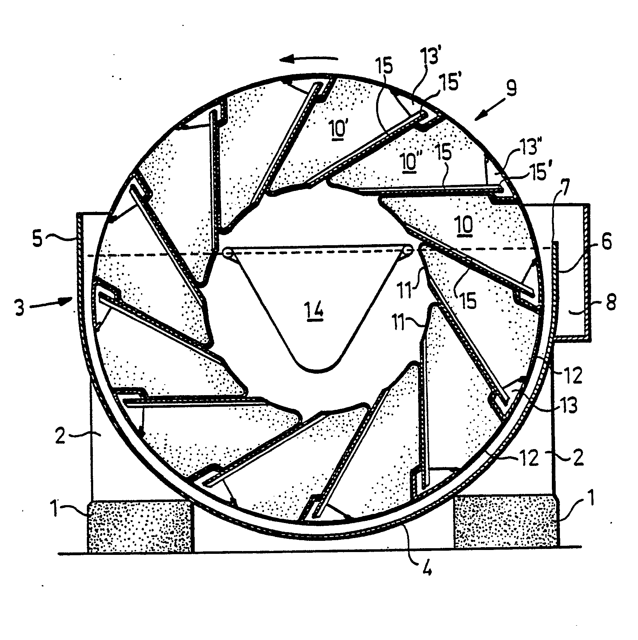

The invention will be described further below with reference to the accompanying drawing, which shows a schematical cross-section through a filter according to the invention.

On a base structure 1 rests a machine stand 2 which in turn supports a vessel 3 having a semicylindrical envelope surface 4, which at its long sides is tangentially extended upwards by vertical portions 5 and 6, the upper edge 7 of the latter forming an overflow inlet, over which liquid or suspension is supplied from an inlet case 8. In practice, the vessel 3 is covered upwards by a casing (non-shown).

In the stand 2 is rotatably journalled an aggregate of a plurality of axially spaced, annual filter discs 9, one of which is shown in the drawing. Each such disc 9 consists of a plurality of substantially triangular, hollow filter members 10 arranged adjacent each other and having their apex portions 11 directed inwardly and their base portions 12 located at the disc circumference. The base portions 12 are arcuate and mounted in a not particularly shown manner such that the interior of each filter element is in communication with an axially directed suction conduit 13. All the suction conduits 13 are mutually connected in a suitable way such that they together form a "hollow axle" common to all filter discs 9, said axle being driveable for rotating the filter discs in a counter-clockwise direction according to the drawing.

In a manner known to those skilled in the art the suction conduits 13 are connected to an outlet conduit for filtrate such that an underpressure is establised in those suction conduits whose associated filter elements are located partly or entirely under the liquid surface, and is maintained at least until the filter elements have been entirely raised above the liquid surface.

Extending in a known manner through all the annular filter discs 9 is a collecting funnel 14, which in an equally known way may be provided with a non-shown discharge screw.

Now, if the arrangement is such that the underpressure ceases as a suction conduit 13' is in a position about 1 o'clock, particles, or, e.g. a filter cake of pulp fibres sucked onto the filter element 10' can be made to fall down into the collecting funnel 14.

The filter elements may very well be "isoscelesly triangular", or, rather circularly section-shaped. Preferably the filter elements are to be "unisoscelesly triangular" or rather "obliquely circularly section-shaped", i.e. having their apex portions eccentrically directed. Thus, in the drawing, the apex members 11 are shown being directed in the rotary direction, i.e. such that the apex portions 11 lead before the base or circumference portions 12 in the rotation. Hereby the great advantage is achieved that, counted in the direction of rotation, the rear or trailing edges 15 of the filter elements incline downwards towards the suction conduits 13 still when the filter elements are raised a considerable distance above the liquid surface. Thus, liquid inside the filter elements is prevented from running out of the elements when they are raised out of the liquid. Instead, the filtrate is conducted along the edges 15, which may preferably be groove-shaped, i.e. having e.g. a U-shaped cross-section, out to the suction conduits 13.

According to the invention, in order to prevent re-flow from the suction conduits, the edges 15 extend into the suction conduits in the way shown so that filtrate possibly remaining in the suction conduits 13 is prevented by the portions 15' of the edges 15 extending into the suction conduits from re-flowing into the filter elements 10. As is seen from the drawing re-flow is effectively prevented approximately from the position occupied by the suction channel 13" of the filter element 10".

As shown in the drawing the suction channel 13 has a wedge shape with its point in the direction of rotation so as to make particles deposited on the bottom of the vessel to be re-mixed into the remaining liquid by being lifted and conveyed by the shovel-like suction channels, which under their rotation also cause a continous mixing of the liquid or suspension.

## Claims

1. Disc filter including a plurality of rotatable, axially spaced, annular filter discs (9), which are adapted to be partly submerged into a liquid or a suspension to be filtered, each disc consisting of a plurality of hollow filter elements (10), the interior of which communicating with axial suction channels (13) arranged at or near the circumference (12) of the annular discs (9) for withdrawal of filtrate, a collecting funnel (14) being introduced through all the annular discs to receive particles or parts of a filter cake falling therefrom, characterized in that the suction channels (13) are provided with re-flow barriers (15') adapted to prevent liquid to flow from the suction channels (13) radially inwards when the filter elements rise from the liquid surface.

2. Disc filter according to claim 1, characterized in that the filter elements have segment shape tapering radially inwards.

3. Disc filter according to claim 2, characterized in that the extensions of the radially inwards converging edges of the filter elements intersect eccentrically in respect of the center of the annular discs.

4. Disc filter according to claim 3, characterized in that the eccentricity is such that the point of intersection between the edges of a filter element leads, as counted in the direction of rotation, before any point on the outer circumference of the same filter element.

5. Disc filter according to claim 4, characterized in that the rear edge (15), as counted in the direction of rotation, of a filter element is inclined downwards towards the associated suction channel (13) still when the element raises above the liquid surface.

6. Disc filter according to claim 1, characterized in that the suction channels (13) are wedge or shovel shaped.

**Patentansprüche**

1. Plattenfilter mit einer Anzahl von rotierenden, axial in Abständen voneinander angeordneten, ringförmigen Filterplatten (9), welche so ausgebildet sind, daß sie teilweise in eine zu filternde Flüssigkeit oder Suspension eintauchen, wobei jede Platte aus einer Anzahl hohler Filterelemente (10) besteht, deren Inneres mit axialen Absaugkanälen (13) in Verbindung steht, welche am oder nahe des Umfanges (12) der ringförmigen Platten (9) angebracht sind zwecks Filtratentnahme, und mit einem Sammeltrichter (14), welcher durch alle ringförmigen Platten zwecks Sammlung von dort abfallenden Teilchen oder Teilen des Filterkuchens durchgeführt ist, dadurch gekennzeichnet, daß die Absaugkanäle (13) mit Rückflußverhinderern (15') ausgestaltet sind, welche so ausgebildet sind, daß sie verhindern, daß die Flüssigkeit aus den Absaugkanälen (13) radial nach innen fließt, wenn die Filterelemente von der Flüssigkeitsoberfläche aufsteigen.

2. Plattenfilter nach Anspruch 1, dadurch gekennzeichnet, daß die Filterelemente eine spitz radial nach innen verlaufende Segmentform besitzen.

3. Plattenfilter nach Anspruch 2, dadurch gekennzeichnet, daß sie die Verlängerungen der radial nach innen konvergierenden Kanten der Filterelemente exzentrisch in Bezug auf die Mitte der ringförmigen Platten überschneiden.

4. Plattenfilter nach Anspruch 3, dadurch gekennzeichnet, daß die Exzentrität so ist, daß der Schnittpunkt zwischen den Kanten der Filterelemente, in Rotationsrichtung betrachtet, vor jedem Punkt des äußeren Umfanges desselben Filterelementes voreilt.

5. Plattenfilter nach Anspruch 4, dadurch gekennzeichnet, daß die hintere Kante (15) des Filterelementes, in Rotationsrichtung betrachtet, nach unten zu dem zugeordneten Absaugkanal (13) geneigt ist und zwar auch dann, wenn das Element sich über die Flüssigkeistoberfläche erhebt.

6. Plattenfilter nach Anspruch 1, dadurch gekennzeichnet, daß die Absaugkanäle (13) keilförmig oder schaufelförmig ausgebildet sind.

**Revendications**

1. Filtre à disques comportant une série de disques filtrants annulaires rotatifs, axialement espacés (9), propres à être en partie immergés dans un liquide ou une suspension à filtrer, chaque disque étant composé d'une série d'éléments filtrants creux (10), dont l'intérieur communique avec des canaux d'aspiration axiaux (13) disposés au niveau ou auprès du pourtour (12) des disques annulaires (9) pour l'extraction du filtrat, un entonnoir collecteur (14) étant introduit à travers tous les disques annulaires pour recevoir des particules ou des parties d'un gâteau de filtre quien tombent, caractérisé en ce que les canaux d'aspiration (13) sont pourvus de barrages antirefluement (15') propres à empêcher du liquide de s'écouler à partir des canaux d'aspiration (13) radialement vers l'intérieur quand les éléments filtrants s'élèvent au-dessus de la surface du liquide.

2. Filtre à disques selon la revendication 1, caractérisé en ce que les éléments filtrants sont en forme de secteur s'amenuisant radialement vers l'intérieur.

3. Filtre à disques selon la revendication 2, caractérisé en ce que les prolongements des bords convergeant radialement vers l'intérieur des éléments filtrants se coupent excentriquement par rapport au centre des disques annulaires.

4. Filtre à disques selon la revendication 3, caractérisé en ce que l'excentricité est telle que le pont d'intersection des bords d'un élément filtrant présente de l'avance, dans le sens de rotation, par rapport à tout point du pourtour extérieur du même élément filtrant.

5. Filtre à disques selon la revendication 4, caractérisé en ce que le bord (15) situé en arrière, dans le sens de rotation, d'un élément filtrant est encore incliné vers le bas, en direction du canal d'aspiration (13) associé quand l'élément se soulève au-dessus de la surface du liquide.

6. Filtre à disques selon la revendication 1, caractérisé en ce que les canaux d'aspiration (13) sont en forme de coin ou de pelle.